# EUROPÄISCHE PATENTANMELDUNG

(11) **EP 1 586 545 A2**
(43) Veröffentlichungstag der Anmeldung: **19.10.2005**
(21) Anmeldenummer: 05008157.9
(22) Anmeldetag: 14.04.2005
(51) Int. Cl.: C03C 25/32, D06M 15/03

(54) **Textiles Flächengebilde aus Glasfasergewebe**

(30) Priorität: 17.04.2004 DE 102004018718
(71) Anmelder: PD Glasfaser GmbH Brattendorf, 98673 Brattendorf (DE)
(72) Erfinder: Bartl, Hans-Jürgen, 98667 Waldau (DE); Müller, Birgit, 96528 Rauenstein (DE); Dressel, Horst, 98669 Grossmannsrod (DE); Fischer, Corinna, 98667 Schönbrunn (DE)
(74) Vertreter: Liedtke, Klaus

(57) **Zusammenfassung**

Die Erfindung betrifft ein textiles Flächengebilde aus einem Glasfasergewebe, welches aus E- oder C-Glas oder einer Kombination von E- und C-Glas besteht.

Der Erfindung liegt die Aufgabe zugrunde, ein Glasfasergewebe mit einem speziellen Appretur- und Bindemittel so zu veredeln und damit seine Gebrauchswerteigenschaften weiterzuentwickeln, dass es als technisch hochwertiges Schichtträgermaterial eine verbesserte Aufnahmefähigkeit und Haftung für weitere Imprägnier- und Beschichtungsmaterialien, insbesondere für die Herstellung von Bitumenbahnen mit einer erhöhten Hydrophobie und Lebensdauer besitzt.

Erfindungsgemäß wird die Aufgabe mit einem textilen Flächengebilde, bei dem das Glasfasergewebe mit einem Appreturmittel veredelt ist, welches aus einer wässrigen Lösung aus Chitosan und/oder einem Chitosanderivat besteht und der Appreturmittelgehalt 2 ... 5 % seines Flächengewichtes beträgt, gelöst.

## Beschreibung

Die Erfindung betrifft ein textiles Flächengebilde aus einem Glasfasergewebe, welches aus E- oder C-Glas oder einer Kombination von E- und C-Glas besteht.

Es handelt sich um ein Glasfasergewebe, das aufgrund seiner hohen mechanischen und thermischen Festigkeit besonders als Schichtträgermaterial in der Bauindustrie, insbesondere zur Herstellung von Bitumenbahnen mit besonderen hydrophoben Eigenschaften geeignet ist.

Glasfasergewebe sind für derartige Einsatzgebiete aufgrund der Eigenschaften ihrer Rohfaserstoffe in unveredeltem Zustand nur bedingt einsetzbar und können erst nach einer dem beabsichtigten Anwendungszweck entsprechenden Veredlung angewendet werden.

Für Textilgewebe ist es in der Textilindustrie bekannt, Chitosan als durch Deacetylierung von Chitin erhaltenes Produkt zu verwenden. Das gute Benetzungsverhalten des Chitosans wird hierbei für Schlichteprozesse, und zur Erhöhung der Farbdruckqualität eingesetzt.

Anwendungsfälle hierzu sind in DE 197 03 362 C1, EP 0 209 330 A2 und JP 2002 23 3926 beschrieben. Dabei werden sowohl synthetische als auch natürliche Fasern sowie auch nichttextile Materialien wie Glas mit Chitosanlösung zur Erhöhung der Farbaffinität beschichtet.

In GB 905 122 wird ein Textilglasgewebe beschrieben, das z.T. aus Glasfasern besteht und in eine 1,8 %-ige deacetylierte Chitinlösung in Kombination mit Chromchloriden als Farbstoff getaucht und anschließend getrocknet wird.

Mit Chitosan ausgerüstete Textilgewebe besitzen verbesserte Textileigenschaften in Bezug auf Waschbeständigkeit, Hautfreundlichkeit und antimikrobieller Ausrüstung.

In EP 1 287 835 A1 ist ein Verfahren beschrieben, bei dem eine Verbesserung des hydrophilen Charakters von Materialien durch Ausrüsten mit Chitosan erreicht wird.

Allgemein bekannt ist der Einsatz von Chitosan, gelöst in verdünnten Säuren, als Binde- bzw. Appretierungsmittel auf Textilgewebe und Vlies. Der Nachteil besteht jedoch darin, dass die erhaltenen Produkte nicht wasserbeständig sind, allerdings können diese in einem nachfolgenden chemischen Verfahrensschritt wasserfest gemacht werden.

Nach WO 88/01316 ist der Einsatz von mikrokristallinem Chitosan in Gelform als Binde- bzw. Appreturmittel u.a. Auf Polyestervlies bekannt.

Binder und Appreturen auf Polyacrylatbasis oder auf Stärkebasis dienen nach konventioneller Art zum Verfestigen von technischen Textilien und auch von Glasfasergewebe. Binder-Appreturmengen von 20 - 30 % bezogen auf das Gesamtgewicht sind z.B. bei Glasvlies oder bei Glasgewebe nach DIN bekannt und zulässig und ebenso auch bei Polyestervlies üblich.

Dieser hohe Binder- und Appreturgehalt des Schichtträgermaterials bedingt jedoch für dessen Weiterverarbeitung und dessen Anwendungen erhebliche Nachteile. Diese liegen in dem relativ hohen Gewicht des Trägermaterials, so dass es nicht für Leichtbau-Armierungstextilien einsetzbar ist.

Bei Anwendungen, bei denen das Schichtträgermaterial nochmals durch Beschichtung oder Imprägnierung weiterverarbeitet wird, behindert der hohe Binder-Appreturgehalt oftmals eine ausreichend dauerhafte Haftung.

Bei Anwendung, bei denen das Endprodukt dauerhaft der Witterung ausgesetzt ist, kann sich in der Appretur bzw. im Binder Feuchte ansammeln, die langzeitig zu passiven Schäden wie Festigkeitsverlust oder Ablösung der Beschichtung vom Trägermaterial führen kann.

So ist z.B. ein Textilglasgewebe nach DIN 18191 mit einer Appretur auf Polyvenylacetatbasis als Schichtträgermaterial für Polymerbitumenbahnen zur Bauwerkabdichtung bekannt, bei dem der hohe Appreturgehalt zu wesentlichen Mängeln des Endproduktes führt.
Das Schichtträgermaterial Glasfasergewebe mit der oben genannten Appretur wird dabei durch die folgenden bekannten Verfahrensschritte zum Endprodukt Dichtungs-Bitumenbahn weiterverarbeitet.
- Imprägnieren des Glasfaserschichtträgers mit heißem, dünnflüssigen Polymer-Bitumen;
- Beschichten des imprägnierten Trägers mit heißem dickflüssigen Polymer-Bitumen;
- Abdecken der Bahnenoberfläche mit Sand, Talkum, Folie usw.
- Abkühlen und Konfektionieren der fertigen Dichtungsbahn.

Die Menge an Appretur in normgerechten, handelsüblichen Glasgeweben beträgt etwa 16 - 20 %. Durch diese Menge werden zwar Anforderungen wie Steifigkeit, Schiebefestigkeit, Reißfestigkeit des Schichtträgermaterials für das Endprodukt erfüllt, gleichzeitig aber wird das Eindringen des Imprägnierbitumens erschwert. Die im Glasfasergewebe vorhandenen Hohlräume und Kapillaren werden nicht vollständig mit Imprägnierbitumen gefüllt. Während der Anwendung als Abdichtungsmaterial wandert eindringende Feuchte in den offenen Kapillaren durch die gesamte Abdichtung und lagert sich in der Appretur ein (Depotbildung). Dadurch wird auf Dauer die Wirkung der Appretur geschwächt und die Haftung der Polymerbitumendeckmasse auf dem Glasfaserschichtträger aufgehoben. Blasenbildung, Deckmassenablösung und schließlich Mängel der Abdichtung sind die Folge.

Nach DD 255 842 sind zur Vermeidung dieser Nachteile textile Flächengebilde als Schichtträgermaterial für Bitumenbahnen bekannt, die mit einer wässrigen Lösung aus Polyvenylacetat und Hydrophobierungsmitteln, einem Stärkeessigsäureester und einem paraffinhaltigen Zirkoniumacetat veredelt sind, wobei das Masseverhältnis Polyvenylacetat : Stärkeesssigsäureester gleich 2:1 bis 3:1 beträgt. Spezielle Appreturzusammensetzungen, vorzugsweise 10 Masse-% wässriges Polyventylacetat, 4 Masse-% Stärkeessigsäureester und 8 Masse-% paraffinhaltiges Zirkoniumacetat bedingen die Ausbildung eines wasserunlöslichen Films auf dem Glasfasergewebe. Dadurch wird die Ablösung der Bitumenschicht vom Schichtträgermaterial bedingt durch Wasserangriff zwar verringert, allerdings nicht vermieden.

Der Erfindung liegt die Aufgabe zugrunde, ein Glasfasergewebe mit einem speziellen Appretur- und Bindemittel so zu veredeln und damit seine Gebrauchswerteigenschaften weiterzuentwickeln, dass es als technisch hochwertiges Schichtträgermaterial eine verbesserte Aufnahmefähigkeit und Haftung für weitere Imprägnier- und Beschichtungsmaterialien, insbesondere für die Herstellung von Bitumenbahnen mit einer erhöhten Hydrophobie und Lebensdauer besitzt.

Erfindungsgemäß wird die Aufgabe mit einem textilen Flächengebilde gelöst, welches die in Anspruch 1 angegebenen Merkmale aufweist.

Vorteilhafte Ausgestaltungen sind in den Unteransprüchen angegeben.

Das Glasfasergewebe wird mit einem Appreturmittel einer wässrigen Lösung aus Chitosan oder einem Chitosanderivat oder einer Mischung von Chitosan oder Chitosanderivaten mit einem anderen Polysaccharid, vorzugsweise modifizierter Stärke verschiedener Arten in unterschiedlichen Konzentrationen und Mischungsverhältnissen zu Chitosan oder deren Derivaten veredelt. Der Appreturgehalt beträgt 2 - 5 %, vorzugsweise 3 %, seines Flächengewichtes.
Vorteilhaft ist es, dass das weitere Polysaccharid in einer Konzentration < 5% in Wasser gelöst wurde und diese Lösung bis zu 90 %, vorzugsweise bis zu 50 % der wässrigen Lösung aus Chitosan und/oder einem Chitosanderivat zugesetzt wird.

Das Glasgewebe besteht aus Kett- und Schußfäden aus E-Glas oder aus C-Glas oder aus einer Kombination E- und C-Glas oder aus einer Kombination von texturiertem E- und C-Glas als Glasfasermischgewebe mit einem vorzugsweisen Appreturgehalt von 3 % seines Flächengewichtes.

Dieses mit Chitosan veredelte Glasfasergewebe besitzt ein Flächengewicht von 80 - 300 g/m², vorzugsweise 180 g/m². Bei gleicher Gewebestruktur wie die in bekannter Weise veredelten Glasfasergewebe ist das Flächengewicht um 10 - 15 % reduziert, da sich die Chitosanlösung als dünner benetzter Film auf die Oberfläche der einzelnen Gewebefäden legt.
Das Appreturmittel Chitosan, mit dem das Glasfasergewebe erfindungsgemäß veredelt ist, besitzt einen Deacetylierungsgrad von 70 - 90 %, vorzugsweise 85 %, und eine Viskosität von 500 - 2500 cP, vorzugsweise 2000 cP, und ist in organischen Säuren gelöst.
Für eine bevorzugte Anwendung des appretierten Glasfasergewebes ist das Chitosan in Essigsäure gelöst.

Das erfindungsgemäße Glasfasergewebe wird als veredeltes Schichtträgermaterial für Bitumenbahnen eingesetzt, wobei diese ein- oder mehrlagig und auch als Bitumen-Oberbahnen angewendet werden.
Dabei besteht ein wesentlicher Vorteil darin, dass sie ein geringes Flächengewicht, d. h. ein um 10 - 15 % reduziertes Flächengewicht gegenüber in bekannter Weise veredelten Bitumenbahnen bei gleichzeitig hohem Hydrophobierungsgrad von bis zu 90 % aufweisen.

Die Erfindung wird nachfolgend in einem Ausführungsbeispiel erläutert:

Ein Glasfasergemisch mit einem Rohgewicht von 175 g/m² wird in eine Appretur, bestehend aus 1,4 % Chitosanlösung, getaucht und anschließend getrocknet. Das appretierte Glasfasergemisch erreicht mit einer Appreturauflage von 3,5 % Chitosan Reißfestigkeiten über 1000 N/5 cm in Längs- und Querrichtung. Diese können mit konventionellen Appreturmitteln nur bei einer Appreturauflage von 16 - 20 % erreicht werden.

Überraschend ist dabei, dass ein nicht nach DIN 18191 hergestelltes Glasfasermischgewebe mit einer Appreturauflage von 3,5 % Chitosan die normgemäße Wasserfestigkeit so nicht erreicht. Eine damit hergestellte Polymerbitumendichtungsbahn nach DIN 52133 (Typ PYE G 200 S4) erfüllt jedoch alle Normanforderungen bezüglich ihrer technischen Kennwerte bei verbesserter Hydrophobie. Die Hydrophobie, wie nach DIN 18191 gefordert, spielt somit nicht mehr die entscheidende Rolle, wie mit dem nachfolgend beschriebene Test nachgewiesen werden kann:
Ein zusätzlicher Test der Feuchteaufnahme nach Wasserlegung, der mit diesem Material und zum Vergleich mit der gleichen Bahntype, aber mit einem konventionellen, nach DIN 18191 hydrophob ausgerüsteten Glasgewebe durchgeführt wird, zeigt folgendes unerwartetes Ergebnis:
Bei der Bitumenbahn mit der konventionellen, hydrophob ausgerüsteten Glasgewebeeinlage war nach 28 Tagen Lagerung im Wasser, welches zur Markierung blau eingefärbt war, die Ebene das Glasgewebeträgers vollkommen durchfeuchtet, d. h. blau eingefärbt, wie nach Ablösen der Bitumenbeschichtung zu erkennen war. Die gleiche Bitumenbahn, aber mit dem erfindungsgemäß ausgerüsteten Glasgewebeträger mit einem Appreturmittel aus 1,4 %iger Chitosanlösung, war nach diesem Test vollkommen unverändert, d. h. es konnte keinerlei Eindringen von Feuchtigkeit festgestellt werden.

Ein zweites Anwendungsbeispiel soll den Einsatz des erfindungsgemäßen Glasfasergewebes als Schichtträgermaterial besonders für den Einsatz als Bitumen-Oberbahn durch die erreichten verbesserten Eigenschaften verdeutlichen:

Ein Glasfasermischgewebe mit einem Flächengewicht von 145 g/m² mit texturiertem Fadenmaterial in Kette und Schuss aus E- und C-Glas wird in eine Appretur, bestehend aus 1,4 % Chitosanlösung getaucht und anschließend getrocknet. Die Appreturauflage beträgt 4 %.
Das gute Saugverhalten des mit Chitosan ausgerüsteten Glasfasergewebes führt zu einer erhöhten Durchimprägnierung und Bitumenaufnahme. Die Bitumenfertigbahn erreicht mit diesem erfindungsgemäß ausgerüsteten Schichtträgermaterial eine Festigkeitszunahme von 70 ... 100 %. Die ohne das erfindungsgemäße Schichtträgermaterial ausgerüsteten Standardgewebe erreichen nur eine Festigkeitszunahme in einem Bereich von 10 % bis maximal 30 % je nach Art und Menge der Ausrüstung.
Die Festigkeitszunahme der Bitumenbahn mit dem erfindungsgemäß ausgerüsteten Schichtträgermaterial ist ein wesentlicher Vorteil der Erfindung.
Je höher die Festigkeitszunahme, desto homogener ist der Träger in der Bitumenmatrix der Bahn eingebunden, desto besser ist die Bahn in der Lage, Belastungen ohne Schäden zu ertragen. Gerade Bitumenbahnen mit traditionellem Glasgewebe leiden auf Grund ihrer geringen Einbindung in der Bahn darunter. Unter Belastung treten dort Fehlstellen und Brüche in der Grenzfläche Gewebe/Bitumendeckmasse auf, wodurch die Dauerhaftigkeit stark leidet.

## Patentansprüche

1. Textiles Flächengebilde aus einem Glasfasergewebe, welches aus E- oder C-Glas oder einer Kombination von E- und C-Glas besteht, **dadurch gekennzeichnet, dass** das Glasfasergewebe mit einem Appreturmittel veredelt ist, welches aus einer wässrigen Lösung aus Chitosan und/oder einem Chitosanderivat besteht und der Appreturmittelgehalt 2 ... 5 % seines Flächengewichtes beträgt.

2. Textiles Flächengebilde nach Anspruch 1, **dadurch gekennzeichnet, dass** die wässrige Lösung in einer organischen Säure gelöstes Chitosan mit einem Deacetylisierungsgrad von 70 ... 90 % und einer Viskosität von 500 ... 2500 cP enthält.

3. Textiles Flächengebilde nach Anspruch 2, **dadurch gekennzeichnet, dass** als organische Säure Essigsäure verwendet wird.

4. Textiles Flächengebilde nach einem der vorhergehenden Ansprüche, **dadurch gekennzeichnet, dass** das Appreturmittel ein weiteres Polysaccharid enthält.

5. Textiles Flächengebilde nach Anspruch 4, **dadurch gekennzeichnet, dass** das weitere Polysaccharid in einer Konzentration < 5% in Wasser gelöst wurde und diese Lösung bis zu 90 % der wässrigen Lösung aus Chitosan und/oder einem Chitosanderivat zugesetzt wird.

6. Textiles Flächengebilde nach Anspruch 4 oder 5, **dadurch gekennzeichnet, dass** als Polysaccharid modifizierte Stärke verwendet wird.

7. Textiles Flächengebilde nach einem der vorhergehenden Ansprüche, **dadurch gekennzeichnet, dass** der Appreturmittelgehalt 2,5 bis 3,5 % des Flächengewichtes beträgt

8. Textiles Flächengebilde nach einem der vorhergehenden Ansprüche, **dadurch gekennzeichnet, dass** das Glasgewebe aus einer Kombination von texturiertem E-und C-Glas als Glasfasermischgewebe besteht.
